# FASCICULE DE BREVET EUROPEEN

(11) **EP 2 440 093 B1**
(45) Date de publication et mention de la délivrance du brevet: **29.05.2013**
(21) Numéro de dépôt: 10726457.4
(22) Date de dépôt: 07.06.2010
(51) Int. Cl.: A47J 36/02

(54) **PLANCHE DE CUISSON, UTILISATION ET PROCÉDÉ DE FABRICATION DE PLANCHES DE CUISSON**
GRILLPLATTE, VERWENDUNG UND VERFAHREN ZUR HERSTELLUNG VON GRILLPLATTEN
GRIDDLE, USE AND METHOD FOR MANUFACTURING GRIDDLES

(30) Priorité: 10.06.2009 FR 0902788
(43) Date de publication de la demande: 18.04.2012
(73) Titulaire: Renzi, Michel Serge, 73300 Chanaz (FR); Renzi, Karine, 73300 Chanaz (FR)
(72) Inventeur: Renzi, Michel Serge, 73300 Chanaz (FR)
(74) Mandataire: Croonenbroek, Thomas Jakob
(86) Numéro de dépôt international: PCT/EP2010/057941
(87) Numéro de publication internationale: WO 2010/142649

(56) Documents cités:
- EP-A- 1 203 553
- EP-A- 1 338 233
- WO-A1-2005/018393
- DE-U1- 8 703 646
- US-A- 5 952 112
- US-A1- 2005 161 458
- US-B1- 6 267 830

## Description

L'invention est relative à une planche de cuisson, tel que divulgué par le document EP 1203 553. L'invention concerne également l'utilisation d'une planche de cuisson et un procédé de fabrication de planches de cuisson.

De nombreuses formes de planches de cuisson, telles que des poêles rondes de cuisson, ont été développées pour faire cuire des aliments.

De façon classique, ces poêles de cuisson comportent une feuille en acier emboutie ou bien deux feuilles métalliques embouties, emboîtées l'une dans l'autre, la feuille inférieure étant réalisée en acier et la feuille supérieure étant réalisée en aluminium ou en acier inoxydable.

On constate cependant que le procédé d'emboutissage limite la fabrication à des planches de cuisson de forme ronde ou ovale pour lesquelles les déformations des bords extérieurs des feuilles embouties sont réduites. Il est en effet difficile d'obtenir des angles droits à partir du procédé d'emboutissage, les angles droit se déformant en arrondi ou faisant vriller ou gondoler le fond de la planche de cuisson.

Pour prévoir des formes de poêles présentant des angles droits, telles que carrées ou rectangulaires, les planches de cuisson doivent comporter une feuille d'acier inoxydable ou d'aluminium de forte épaisseur, par exemple supérieure à 2 cm. Toutefois, dans ce cas, les poêles deviennent lourdes et onéreuses, compte tenu notamment de leur importante dimension.

De plus, les poêles comportent parfois un revêtement anti-adhésif sur la feuille supérieure pour limiter l'apport de graisse et faciliter le nettoyage, tel que le polytétrafluoréthylène. Toutefois, lorsque le revêtement vieillit ou s'abime, il peut y avoir ingestion du revêtement qui est un produit toxique.

La présente invention vise notamment à résoudre les problèmes de l'état de la technique en proposant une planche de cuisson améliorée à la fois économique et résistante et permettant une cuisson homogène des aliments.

A cet effet, l'invention a pour objet une planche de cuisson caractérisée en ce qu'elle comporte un fond plat comprenant:
- deux couches d'aluminium,
- une plaque intermédiaire anti-déformation en acier entre lesdites deux couches d'aluminium, et
- deux couches d'acier inoxydable prenant en sandwich lesdites couches d'aluminium et ladite plaque intermédiaire anti-déformation,
lesdites couches d'aluminium, d'acier inoxydable et ladite plaque intermédiaire anti-déformation étant soudées ensemble par brasage par induction et ledit fond plat présentant une forme générale sensiblement carrée ou rectangulaire.

La succession des différentes couches d'aluminium, d'acier inoxydable et de la plaque intermédiaire anti-déformation en acier brasées par induction, constitue un « fond thermique » donnant une certaine rigidité à la planche de cuisson, qui va empêcher le vrillage ou le bombage de l'empilement de couches lorsqu'il est chauffé, nécessaire à la forme carrée ou rectangulaire de la planche de cuisson, tout en limitant son épaisseur. La succession des différentes couches soudées ensemble par induction confère une plus grande rigidité à la planche de cuisson autorisant ainsi une forme rectangulaire sans augmenter l'épaisseur. La forme carrée ou rectangulaire de la planche de cuisson permet en outre une meilleure disposition géométrique des aliments pour la cuisson à partir d'une même source de chaleur.

Par ailleurs, le brasage par induction des différentes couches et de la plaque intermédiaire anti-déformation supprime l'air entre les couches, ce qui permet d'améliorer la conduction de la planche de cuisson. La température est alors mieux répartie dans le fond de la planche, ce qui permet de garantir une cuisson homogène des aliments et de limiter l'apport d'énergie nécessaire à la cuisson. Lors d'une utilisation sur une cuisinière classique, le plus petit foyer est suffisant pour garantir tout type de cuisson.

En outre, la couche supérieure en acier inoxydable permet que les aliments ne collent pas à la surface de la planche de cuisson. On limite alors l'apport de graisses et on facilite le nettoyage sans nécessiter de revêtement particulier.

Selon une ou plusieurs autres caractéristiques de la planche de cuisson, prise seule ou en combinaison,
- la plaque intermédiaire anti-déformation comporte une résistance électrique,
- l'épaisseur de la plaque intermédiaire anti-déformation est comprise entre 1 et 2, 5 millimètres,
- les couches d'acier inoxydables présentent une épaisseur comprise entre 0, 1 et 0, 5 centimètres et les couches d'aluminium présentent une épaisseur comprise entre 1 et 3 millimètres,
- les couches d'acier inoxydable sont brossées ou polies,
- ladite planche de cuisson comporte un revêtement céramique,
- ladite planche de cuisson comporte des poignées amovibles présentant des moyens d'encliquetage.

L'invention a aussi pour objet l'utilisation d'une planche de cuisson telle que décrite précédemment comme poêle, faitout, casserole ou sauteuse de cuisson ou comme assiette de cuisson.

L'invention a encore pour objet un procédé de fabrication d'une planche de cuisson, caractérisé en ce que lesdites couches d'aluminium, d'acier inoxydable et ladite plaque intermédiaire anti-déformation sont soudées ensemble par brasage par induction.

D'autres avantages et caractéristiques apparaîtront à la lecture de la description de l'invention, ainsi que sur les figures annexées sur lesquelles :
- la figure 1 est une vue en perspective d'une planche de cuisson,
- la figure 2 est une vue de côté de la planche de cuisson de la figure 1,
- la figure 3 est une vue partielle schématisée en coupe transversale de la planche de cuisson de la figure 1, et
- la figure 4 est une vue en perspective d'un ensemble de planches de cuisson.

Sur ces figures, les éléments identiques portent les mêmes numéros de référence.

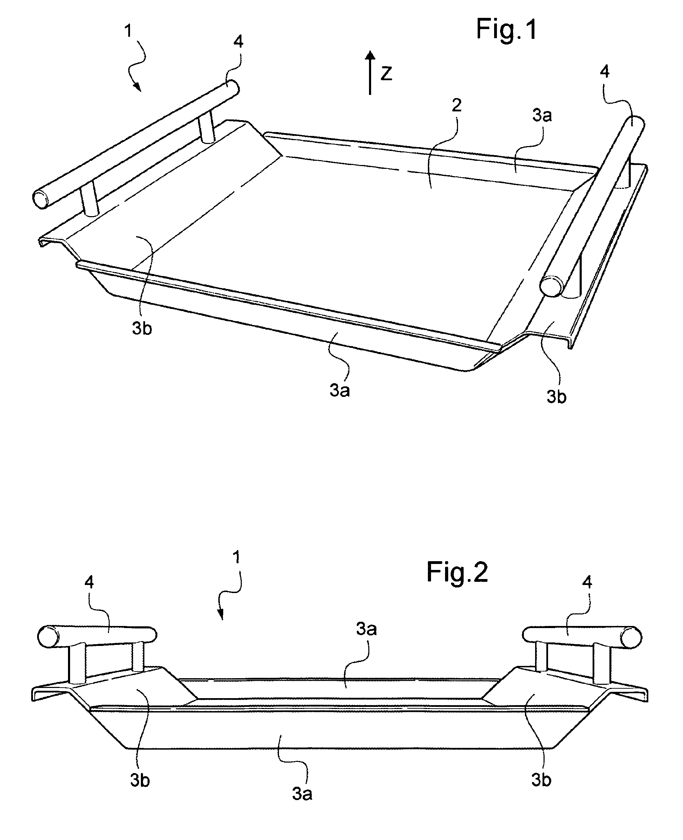

Les figures 1 à 4 représentent une planche de cuisson 1 destinée à recevoir des aliments pour leur cuisson et pouvant être utilisée par exemple comme poêle de cuisson, telle qu'une poêle à crêpe ou une poêle chinoise, ou comme faitout, casserole ou sauteuse de cuisson. On peut prévoir à cet effet un couvercle adapté pour la planche de cuisson (non représenté). On peut également utiliser la planche de cuisson comme assiette de cuisson qui présente l'avantage d'être incassable.

La planche de cuisson 1 comprend un fond plat 2 et des bords extérieurs évasés. Le fond plat 2 présente une forme sensiblement carrée ou rectangulaire. La planche de cuisson 1 comporte quatre bords extérieurs disposés en périphérie du fond plat 2, formant une planche de cuisson semi-parallélépipédique.

On a représenté sur les figures 1 et 2 une planche de cuisson 1 à fond plat rectangulaire présentant deux bords 3a sur les grands côtés formant un angle d'environ 90° avec le fond plat 2 et deux bords 3b inclinés sur les petits côtés formant un angle d'environ 135° avec le fond plat 2. Les bords extérieurs 3b des petits côtés et les bords extérieurs des grands côtés 3b sont par exemple soudés ensemble le long d'une arête d'assemblage en formant un angle de 45° avec une droite verticale Z sur la figure 1. L'arête d'assemblage peut être prévue légèrement bombée pour ne pas présenter d'angle vif. On peut prévoir en outre que les bords extérieurs parallèles deux à deux présentent la même hauteur. Par exemple, les bords extérieurs 3b des petits côtés sont prévus plus hauts que les bords extérieurs 3a des grands côtés. La hauteur des bords extérieurs 3b des petits côtés est par exemple de l'ordre de 1 cm dans le cas d'une poêle de cuisson et de 13 cm dans le cas d'un faitout.

On peut en outre prévoir des bords extérieurs conformés à leurs extrémités pour coopérer avec un support adapté (non représenté). Par exemple, et comme visible sur les figures, les bords extérieurs 3a, 3b sont recourbés en forme de crochet pour pouvoir être posés et maintenus par un support correspondant. Le support est par exemple directement posé sur une table et comporte une ou plusieurs bougies à disposer sous le fond plat 2, de manière à maintenir les aliments chauffés.

La planche de cuisson 1 peut comporter un manche, pouvant être amovible ou fixé à un bord extérieur de la planche, par exemple en bois, en acier, en acier inoxydable ou en résine synthétique (non représenté).

On peut en outre prévoir que la planche de cuisson 1 comporte deux poignées 4, amovibles ou fixées, par exemple soudées, vissées ou rivetées, disposées respectivement sur deux bords extérieurs 3b opposés du fond plat 2. Les poignées peuvent être en bois, en acier, en acier inoxydable ou en résine synthétique (voir figures 1 et 2). Par exemple, la planche de cuisson 1 comporte des poignées amovibles présentant des moyens d'encliquetage du type « à bille rétractable » coopérant avec les bords extérieurs 3b du fond plat 2. Dans le cas d'une planche de cuisson 1 rectangulaire, on dispose les poignées 4 sur les bords extérieurs 3b des petits côtés pour faciliter la préhension de la planche de cuisson.

Dans le cas de manche ou poignée en acier inoxydable, on prévoit que la planche de cuisson 1 présente au moins une entretoise isolante, par exemple en résine synthétique telle que la résine synthétique connue sous le nom de marque bakélite, entre la partie de préhension et le bord extérieur de la planche.

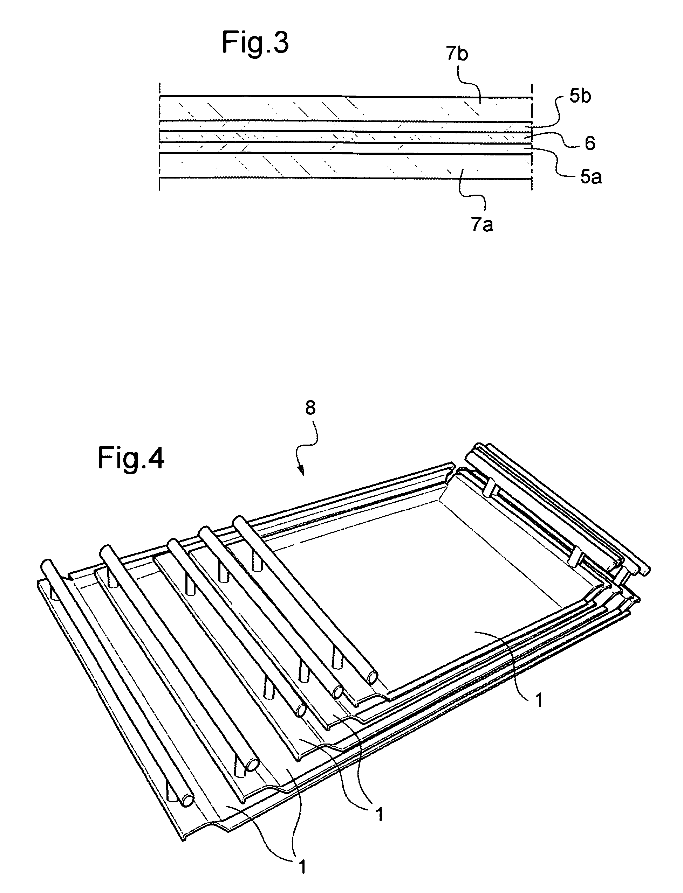

Mieux visible sur la figure 3 représentant la planche de cuisson en coupe, le fond plat 2 comporte deux couches d'aluminium 5a, 5b, une plaque intermédiaire anti-déformation en acier 6 entre lesdites deux couches d'aluminium, et deux couches d'acier inoxydable 7a, 7b prenant en sandwich lesdites couches d'aluminium 5a, 5b et ladite plaque intermédiaire anti-déformation 6.

Les couches d'acier inoxydables 7a, 7b présentent par exemple une épaisseur comprise entre 0, 1 cm et 0, 5 cm. On utilise par exemple de l'acier inoxydable T304, convenant dans l'industrie alimentaire.

Les couches d'aluminium 5a, 5b présentent par exemple une épaisseur comprise entre 1 et 3 mm, par exemple 2 mm. L'épaisseur de la plaque intermédiaire anti-déformation 6 est par exemple comprise entre 1 et 2, 5 mm.

Les couches d'acier inoxydable 7a, 7b peuvent être brossées ou polies. On prévoit par exemple que l'intérieur de la planche de cuisson 1 destiné à recevoir les aliments est poli tandis que l'extérieur est brossé.

L'empilement des différentes couches d'aluminium 5a, 5b, d'acier inoxydable 7a, 7b et la plaque intermédiaire anti-déformation 6 est conducteur de l'électricité de sorte qu'on peut utiliser un procédé de fabrication par brasage par induction pour les lier entre elles.

Le brasage par induction consiste à faire parcourir un courant électrique dans un solénoïde appelé « inducteur » qui va créer un champ magnétique variable. On place l'empilement conducteur électrique des couches d'aluminium 5a, 5b, d'acier inoxydable 7a, 7b et la plaque intermédiaire anti-déformation 6 dans le champ, ou à proximité de celui-ci. L'empilement est alors le siège de forces électromotrices d'induction (courants induits) qui dissipent la chaleur dans l'empilement de couches.

On utilise pour cela par exemple un équipement comprenant un générateur haute fréquence (de 0,1 à quelques MHz) et comprenant une ou deux presses, par exemple à commande hydraulique. Chaque presse supporte un inducteur haute fréquence pour le brasage des pièces à traiter. L'inducteur chauffe un support convertisseur de l'énergie électromagnétique en chaleur (ou « susceptor » en anglais) qui transmet par conduction la chaleur à l'empilement de couches. Une poudre (brasure), est fondue entre les plaques qui sont pressées.

La succession des différentes couches d'aluminium 5a, 5b, d'acier inoxydable 7a, 7b et de la plaque intermédiaire anti-déformation 6 en acier brasées par induction, constitue un « fond thermique » donnant une certaine rigidité à la planche de cuisson 1, qui va empêcher le vrillage ou le bombage de l'empilement de couches lorsqu'il est chauffé, nécessaire à la forme carrée ou rectangulaire de la planche de cuisson, tout en limitant son épaisseur. La succession des différentes couches soudées ensemble par induction confère une plus grande rigidité à la planche de cuisson 1 autorisant ainsi une forme rectangulaire sans augmenter l'épaisseur. La forme carrée ou rectangulaire de la planche de cuisson 1 permet en outre une meilleure disposition géométrique des aliments pour la cuisson à partir d'une même source de chaleur.

Par ailleurs, le brasage par induction des différentes couches 5a, 5b, 7a, 7b et de la plaque intermédiaire anti-déformation 6 supprime l'air entre les couches, ce qui permet d'améliorer la conduction de la planche de cuisson 1. La température est alors mieux répartie dans le fond 2 de la planche 1, ce qui permet de garantir une cuisson homogène des aliments et de limiter l'apport d'énergie nécessaire à la cuisson. Lors d'une utilisation sur une cuisinière classique, le plus petit foyer est suffisant pour garantir tout type de cuisson.

En outre, la couche supérieure en acier inoxydable 7b permet que les aliments ne collent pas à la surface de la planche de cuisson. On limite alors l'apport de graisses et on facilite le nettoyage sans nécessiter de revêtement particulier.

Ainsi, lors de leur utilisation, les planches de cuisson 1 sont chauffées au moyen de la flamme d'un brûleur à gaz, de résistances électriques ou de plaques chauffantes par induction.

Selon un exemple de réalisation, la plaque intermédiaire anti-déformation 6 comporte une résistance électrique, pour fournir une puissance par exemple de l'ordre de 200W. La résistance électrique peut être adaptée pour être alimentée en tension 220V. On prévoit par exemple de noyer la plaque intermédiaire anti-déformation 6 dans les deux couches d'aluminium 5a, 5b.

Lors de leur utilisation, les planches de cuisson 1 comportant une plaque intermédiaire anti-déformation 6 présentant une résistance électrique permettent de cuire, maintenir les aliments au chaud ou de les réchauffer.

Comme on peut le distinguer sur la figure 4, on peut prévoir un ensemble de planche de cuisson 8 comportant une pluralité de planches de cuisson 1 gigognes, conformées pour s'empiler les unes dans les autres. On facilite ainsi leur rangement.

On a représenté sur cet exemple un ensemble de planche de cuisson 8 comportant cinq planches de cuisson 1 empilées les unes dans les autres. On constate que la forme sensiblement carrée permet de faciliter le rangement. Les dimensions sont par exemple en centimètres : 24x30, 28x45, 26,3x38, 24,3x31 et 20,3x22.

On comprend donc que la planche de cuisson 1 présente une structure interne permettant de présenter une forme carrée ou rectangulaire tout en étant à la fois économique et résistante et permettant une cuisson homogène des aliments.

## Revendications

1. Planche de cuisson comportant un fond plat (2) comprenant:
- deux couches d'aluminium (5a, 5b),
- une plaque intermédiaire anti-déformation (6) en acier entre lesdites deux couches d'aluminium, et
- deux couches d'acier inoxydable (7a, 7b) prenant en sandwich lesdites couches d'aluminium (5a, 5b) et ladite plaque intermédiaire anti-déformation (6),
**caractérisée en ce que** lesdites couches d'aluminium (5a, 5b), d'acier inoxydable (7a, 7b) et ladite plaque intermédiaire anti-déformation (6) sont soudées ensemble par brasage par induction et **en ce que** ledit fond plat (2) présente une forme générale sensiblement carrée ou rectangulaire.

2. Planche de cuisson selon la revendication 1, **caractérisée en ce que** la plaque intermédiaire anti-déformation (6) comporte une résistance électrique.

3. Planche de cuisson selon l'une des revendications 1 ou 2, **caractérisée en ce que** l'épaisseur de la plaque intermédiaire anti-déformation (6) est comprise entre 1 et 2, 5 millimètres.

4. Planche de cuisson selon l'une des revendications 1 à 3, **caractérisée en ce que** les couches d'acier inoxydables (7a, 7b) présentent une épaisseur comprise entre 0, 1 et 0, 5 centimètres et les couches d'aluminium (5a, 5b) présentent une épaisseur comprise entre 1 et 3 millimètres.

5. Planche de cuisson selon l'une des revendications 1 à 4, **caractérisée en ce que** les couches d'acier inoxydable (7a, 7b) sont brossées ou polies.

6. Planche de cuisson selon l'une des revendications 1 à 5, **caractérisée en ce qu'**elle comporte des poignées amovibles présentant des moyens d'encliquetage.

7. Utilisation d'une planche de cuisson (1) selon l'une des revendications 1 à 6 comme poêle, faitout, casserole ou sauteuse de cuisson.

8. Utilisation d'une planche de cuisson (1) selon l'une des revendications 1 à 6 comme assiette de cuisson.

9. Procédé de fabrication d'une planche de cuisson selon l'une des revendications 1 à 6, **caractérisé en ce que** lesdites couches d'aluminium (5a, 5b), d'acier inoxydable (7a, 7b) et ladite plaque intermédiaire anti-déformation (6) sont soudées ensemble par brasage par induction.

## Patentansprüche

1. Kochplatte, umfassend einen flachen Boden (2), umfassend:
- zwei Aluminiumschichten (5a, 5b),
- eine verformungsbeständige Zwischenplatte (6) aus Stahl zwischen den beiden Aluminiumschichten, und
- zwei Schichten aus rostfreiem Stahl (7a, 7b), die die Aluminiumschichten (5a, 5b) und die verformungsbeständige Zwischenplatte (6) sandwichartig zwischen sich aufnehmen,
**dadurch gekennzeichnet, dass** die Schichten aus Aluminium (5a, 5b), aus rostfreiem Stahl (7a, 7b) und die verformungsbeständige Zwischenplatte (6) durch Induktionslöten zusammengeschweißt sind, und dass der flache Boden (2) eine im Wesentlichen quadratische oder rechteckige allgemeine Form aufweist.

2. Kochplatte nach Anspruch 1, **dadurch gekennzeichnet, dass** die verformungsbeständige Zwischenplatte (6) einen elektrischen Widerstand umfasst.

3. Kochplatte nach einem der Ansprüche 1 oder 2, **dadurch gekennzeichnet, dass** die Dicke der verformungsbeständigen Zwischenplatte (6) zwischen 1 und 2,5 Millimeter beträgt.

4. Kochplatte nach einem der Ansprüche 1 bis 3, **dadurch gekennzeichnet, dass** die Schichten aus rostfreiem Stahl (7a, 7b) eine Dicke zwischen 0,1 und 0,5 Zentimeter und die Schichten aus Aluminium (5a, 5b) eine Dicke zwischen 1 und 3 Millimeter aufweisen.

5. Kochplatte nach einem der Ansprüche 1 bis 4, **dadurch gekennzeichnet, dass** die Schichten aus rostfreiem Stahl (7a, 7b) gebürstet oder poliert sind.

6. Kochplatte nach einem der Ansprüche 1 bis 5, **dadurch gekennzeichnet, dass** sie abnehmbare Griffe umfasst, die Rastmittel aufweisen.

7. Verwendung einer Kochplatte (1) nach einem der Ansprüche 1 bis 6 als Bratpfanne, Kochkessel, Kasserolle oder Schmorpfanne.

8. Verwendung einer Kochplatte (1) nach einem der Ansprüche 1 bis 6 als Grillplatte.

9. Verfahren zur Herstellung einer Kochplatte nach einem der Ansprüche 1 bis 6, **dadurch gekennzeichnet, dass** die Schichten aus Aluminium (5a, 5b), aus rostfreiem Stahl (7a, 7b) und die verformungsbeständige Zwischenplatte (6) durch Induktionslöten zusammengeschweißt sind.

## Claims

1. Cooking pan comprising a flat bottom (2) comprising:
- two layers of aluminium (5a, 5b),
- an intermediate anti-warping steel plate (6) between said two layers of aluminium, and
- two layers of stainless steel (7a, 7b) sandwiching said layers of aluminium (5a, 5b) and said intermediate anti-warping plate (6),
**characterized in that** said layers of aluminium (5a, 5b), of stainless steel (7a, 7b) and said intermediate anti-warping plate (6) are welded together by induction brazing and **in that** said flat bottom (2) has a substantially square or rectangular general shape.

2. Cooking pan according to Claim 1, **characterized in that** the intermediate anti-warping plate (6) comprises an electrical resistance.

3. Cooking pan according to one of Claims 1 and 2, **characterized in that** the thickness of the intermediate anti-warping plate (6) is between 1 and 2.5 millimetres.

4. Cooking pan according to one of Claims 1 to 3, **characterized in that** the layers of stainless steel (7a, 7b) have a thickness of between 0.1 and 0.5 centimetres and the layers of aluminium (5a, 5b) have a thickness of between 1 and 3 millimetres.

5. Cooking pan according to one of Claims 1 to 4, **characterized in that** the layers of stainless steel (7a, 7b) are brushed or polished.

6. Cooking pan according to one of Claims 1 to 5, **characterized in that** it comprises removable handles having snap-fitting means.

7. Use of a cooking pan (1) according to one of Claims 1 to 6 as a frying pan, stew pot, saucepan or skillet.

8. Use of a cooking pan (1) according to one of Claims 1 to 6 as a hotplate.

9. Method for manufacturing a cooking pan according to one of Claims 1 to 6, **characterized in that** said layers of aluminium (5a, 5b), of stainless steel (7a, 7b) and said intermediate anti-warping plate (6) are welded together by induction brazing.
